# EUROPEAN PATENT SPECIFICATION

(11) **EP 0 534 565 B1**
(45) Date of publication and mention of the grant of the patent: **09.09.1998**
(21) Application number: 92202939.2
(22) Date of filing: 24.09.1992
(51) Int. Cl.: A01J 7/00, A01J 5/013

(54) **An implement for and a method of milking animals automatically**
Verfahren und Vorrichtung zum Melken von Tieren
Dispositif et procédé de traite d'animaux

(30) Priority: 27.09.1991 NL 9101636
(43) Date of publication of application: 31.03.1993
(60) Divisional application: 97203807.9
(73) Proprietor: MAASLAND N.V., 3155 PD Maasland (NL)
(72) Inventor: van den Berg, Karel, NL-2971 BR Bleskensgraaf (NL); Fransen, René, NL-3135 ZD Vlaardingen (NL)
(74) Representative: Mulder, Herman

(56) References cited:
- EP-A- 0 360 354
- EP-A- 0 385 539
- WO-A-90/07268
- GB-A- 2 218 888
- NL-A- 9 001 689
- US-A- 3 874 337
- US-A- 4 516 530
- LANDTECHNIK vol. 41, no. 5, May 1986, LEHRTE,DE pages 220 - 223 H. SCHÖN 'AUTOMATISIERTE MILCHVIEHHALTUNG - EINE UTOPIE?'
- LANDBOUWMECHANISATIE vol. 39, no. 2, February 1988, WAGENINGEN, NL page 92 'HET B2000 AUTOMATISCHE MELKSYSTEEM'
- TRANSACTIONS OF THE AME. SOC. OF AGRICULTURAL ENGINEERS vol. 27, no. 4, July 1984, ST. JOSEPH, MICHIGAN, USA pages 1204 - 1210 A.K. DATTA ET AL. 'REAL TIME ACQUISITION AND ANALYSIS OF MILK CONDUCTIVITY DATA'
- 'DICTIONAIRE EN 2 VOLUMES' , LAROUSSE , RUE DE MONTPARNASSE 17, 75298 PARIS,FR

## Description

The present invention relates to a method of automatically milking animals, such as cows, in an implement with a milking plant including a computer and a milking robot with teat cups which are automatically connectable to the teats of an animal to be milked, in which method by means of a flow-sensitive sensor signals are produced indicating the beginning and the end of the milk flow from at least one teat.

Such a method is known from NL-A 9001689. In that patent application a flow-sensitive sensor for establishing 'blind milking'. i.e. the folding of a teat during automatic connection of a teat cup to said teat, is mentioned. Further said document teaches, that the signal supplied by the sensors, by means of which mastitis or "blind milking" is established, can also be used for decoupling and connecting again the relevant teat cup, use being made, of course, again of the robot arm, by means of which the teat cups had been connected automatically to the teats.

Automatic milking takes place in a milking parlour which is provided with a milking robot comprising, for instance, a robot arm functioning as a carrier of one or several teat cups to be applied to the teats of an animal's udder. The teats are located by means of one or several detectors, whereupon the robot arm - swung from a side of the milking parlour to underneath the animal - can be positioned such that through an upward movement of an appropriate teat cup said teat cup can be applied to a teat of the animal's udder. After that all the teat cups have been connected and subsequently the milking proces has taken place, the teat cups are disconnected, while the milk yield from the teats individually or the total milk yield can be determined. As already mentioned, in such automatic milking processes it is known to apply a flow-sensitive sensor to check the beginning and the end of the milk flow. The object of the invention is the application of this sensor for more and other purposes than only indicating the beginning and the end of the milk flow.

Therefore, according to the invention, the method as described in the opening paragraph is characterized by determining in the computer the dead time between the instant when a vacuum-sensitive sensor has determined a sufficient vacuum in a teat cup applied to a relevant teat and the instant when the start of a flow of milk from this teat has been determined by the flow-sensitive sensor, whereafter, when in the computer it is established that the dead time exceeds a predetermined period of time as well as upon the production of the signal indicating the end of the milk flow from said teat, the teat cup is automatically put out of operation. In this respect the expression "a teat cup is being put out of operation" means that the teat cup may be disconnected from the respective teat or that only the vacuum in the teat cup is taken away while the teat cup remains pressed against the teat by means of the carrier of the teat cup(s).

The time lapse from the instant when a teat cup is connected to a teat to the instant when the flow of milk from this teat starts is called the dead time. It will be sufficient to determine the dead time with respect to the start of the milk flow in the teat cup applied last. The idea behind this is that the dead time with respect to the last teat cup will be much the same as the dead time determined for the application of the other teat cups. It will be more correct, however, to determine the dead time for the flow of milk from each of the teats.

In actual practice there appear to occur situations associated with the physical condition of the animals, which cause relatively large differences in dead times with regard to the start of the milk flows from the various teats. Of course, the situation where e.g. the last teat cup has not been applied correctly, or not at all, with the result that the animal cannot be milked at all, whilst the flows of milk in the teat cups connected first have already started, may occur at any time. Nevertheless, the animal should then leave the milking parlour. As far as the dead time(s) has (have) been established with regard to the flows of milk which did start, further conclusions may of course be drawn therefrom.

According to a preferred aspect of the invention, the extent to which the dead time has exceeded a predetermined value for a relevant animal can be determined by means of the computer. In particular, for each of the flows of milk from the various teats, the extent to which dead time exceeds the predetermined value may be determined. This predetermined value will be different not only for various animals, but it will also change as the animals grow old. The farmer, however, will be basically interested only in those cases where the predetermined value is exceeded. When an animal is oestrous or ill, the dead time will generally be longer than usual. If the predetermined value of the dead time has been exceeded by a certain percentage, the farmer has accordingly obtained an indication signal of the animal's heat or illness.

If a relatively long time, for example, twice the dead time determined previously for the animal, has elapsed after the vacuum in the teat cup has been established, then the computer may draw the conclusion that the dead time cannot be determined, because the flow of milk has apparently not started, which may happen when an animal just milked has still entered the milking parlour again. The animal should then be led away from the milking parlour.

Advantageously, a more reliable indication signal of heat or illness is obtainable from parameters such as the milk rate of flow and/or temperature of a milk flow and/or the milk yield and/or the number of times per given time period that an animal pays a visit to the milking parlour and/or the food quantity consumed in the milking parlour, which parameters for ill or oestrous animals are different from those for healthy and non-oestrous animals, by combination of one or several such parameters with the dead time by means of a computer. In doing so, to achieve a higher accuracy, especially the temperatures of each of the flows of milk from the various teats can be determined. For the determination of the temperature, use may be made of temperature-sensitive sensors to be arranged in the flow of milk. When the farmer has obtained an indication that the animal is ill or threatens to fall ill, it is important to know whether mastitis or any other disease is concerned. According to a preferred feature of the invention, an indication that an animal suffers from mastitis can therefore be obtained in the computer by means of a sensor for electrical conductivity of the milk flow and, if necesary, also by means of a temperature-sensitive sensor. In particular, the electrical conductivity of the flow of milk from each of the teats can be determined. Furthermore, it can also be determined in the computer to what extent the electrical conductivity of a flow of milk has exceeded a predetermined value for a relevant animal. In order to exclude short-lived fluctuations as well as any highly gradual change in electrical conductivity of the flow of milk, this predetermined value may be repeatedly redefined by the progressive average of the relevant values established in the immediately preceding period of time, for instance, that of the latest ten measurements of electrical conductivity made. As a matter of fact, this may also apply to the predetermined threshold value of the dead time.

Not only is the flow-sensitive sensor be used for establishing that a flow of milk has started, but also for establishing that a flow of milk has stopped. According to the invention, such a stop of the flow of milk is indicated to the computer, which ensures that the relevant teat cup is automatically put out of operation, preferably after the lapse of a certain period of time,

The processing of the signals originating from the sensors by means of a computer permits that, at times randomly selectable by the farmer, it can be indicated on the monitor display of the computer and/or by means of a printer, for which animals and to what extent the dead time and/or electrical conductivity of a flow of milk have exceeded their respective predetermined values. On the monitor display it can be depicted that e.g.:
cow 25 gave evidence of an electrical conductivity which was 16% in excess of the predetermined value,
cow 100 gave evidence of an electrical conductivity which was 20% in excess of the predetermined value,
cow 150 gave evidence of an electrical conductivity which was 22% in excess of the predetermined value, etc. Similarly, it may be shown that a dead time for cow 15 has been established which was 13% in excess of a previously determined value, that a dead time for cow 38 has been established which was 8% in excess of a previously determined value, etc.

On the basis of the information on the electrical conductivity of a flow of milk, as given by the computer, the farmer can decide on whether the milk produced by a relevant animal has to be drained off, e.g. into a waste tank, or not. In the first case, the milk obtained from the animal may be fed through a computer-controlled three-way valve in a relevant milk line and drained off into e.g. a waste tank instead of being fed into a milk tank. When it is possible to establish that any quarter of an animal's udder suffers from mastitis, this permits to discard only the milk from the quarter affected. This information, too, may be indicated on the monitor display or be printed; so, in addition to the aforementioned data on electrical conductivity and dead time, it can be indicated that e.g. milk from cow 2 is being discarded, that milk from cow 36 is being discarded, etc.

The invention futher relates to an implement for automatically milking animals, such as cows, with a milking plant including a computer and a milking robot with teat cups which are automatically connectable to the teats of an animal to be milked, the implement further comprising a flow-sensitive sensor for producing signals indicating the beginning and the end of the flow of milk from at least one teat, which implement is characterized in that, the implement is provided with a vacuum-sensitive sensor and the computer is arranged to determine in response to signals from the flow-sensitive sensor and the vacuum-sensitive sensor, the dead time between the instant when the vacuum-sensitive sensor has determined the existence of a sufficient vacuum in a teat cup connected to a teat and the instant when the flow of milk from this teat has started and to determine if said dead time exceeds a predetermined period of time in which case, as well as upon the production of a signal indicating the end of the milk flow from that teat, the teat cup is put out of operation automatically by means of the computer.

The invention will now be further explained with reference to the embodiment represented in the accompanying drawings.
Figure 1 shows a schematic diagram of a milking plant according to the invention, while
Figure 2 is a teat cup drawn in detail.

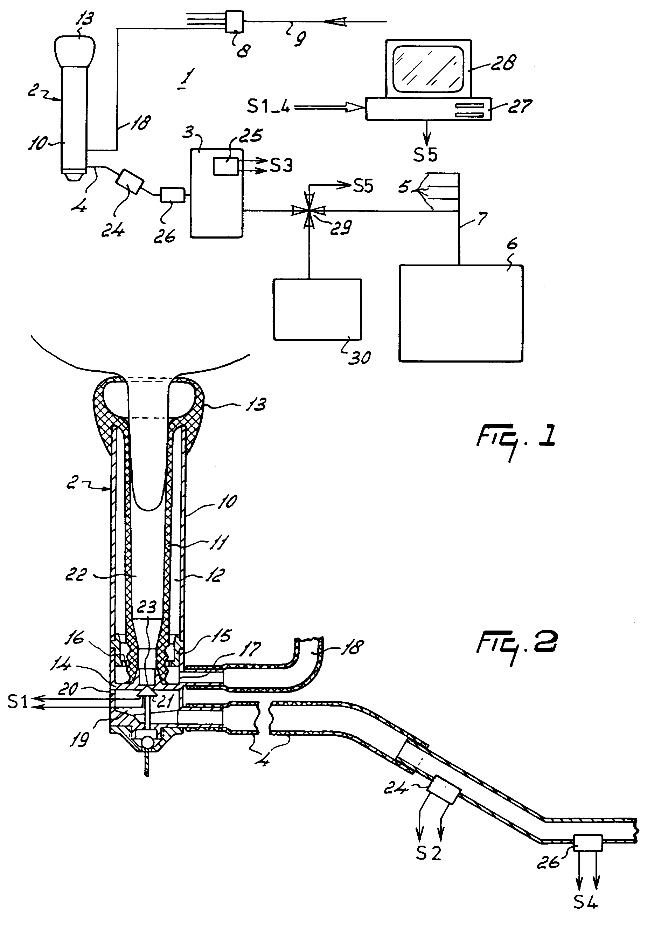

In Figure 1, a milking plant 1 for an implement for milking an animal automatically is depicted, with the representation of this milking plant being limited to only one teat cup 2 and one milk meter 3, for the sake of simplicity. The milk obtained from each udder quarter by means of teat cups 2 can be fed through a separate milk line 4 to a milk measuring apparatus comprising four milk meters 3. Separate discharge lines 5 of the milk meters 3 are connected to a common output line 7 running to a milk tank 6. A more elaborate basic set-up of the milking plant is depicted and described in EP-A-0 385 539. The milking plant further comprises, as far as matters are of importance to the present invention, a pulsator system 8 for the four teat cups 2. Vacuum line 9 for the pulsator system 8 is connected to a vacuum pump with equalizer tank, as is described in said European Patent Application.

In Figure 2, a longtitudinal section of a teat cup 2 is shown; as is usual, the teat cup has been built up from a rigid, e.g. metal, sleeve 10, from an inner wall 11 made of a flexible material, such as rubber, located in this sleeve, and from a rubber cap 13 which closes off the top side of gap 12 between the sleeve 10 and the inner wall 11. The bottom side of the gap between the sleeve 10 and the inner wall 11 is closed by a sealing ring 14, whilst between the sleeve 10 and the inner wall, above said ring, there is provided a ring 15 having an opening 16. In between the sealing ring 14 and the ring 15 there is a space to which a pulsating vacuum is applied by the pulsator system 8 through a line 18 and an opening 17, giving rise to a pulsating vacuum in the space between the sleeve 10 and the inner wall 11, which pulsating vacuum causes alternately the inner wall to enclose the teat tightly and to move outwards, resulting in the rhythmic motion about the teat as required for milking, provided that the teat cup is correctly connected to this teat. To provide a buffer for the milk to be collected and to minimise fluctuations in the vacuum under the teat, there is provided a buffer space 19 in the bottom part of the teat cup, where a relatively narrow air intake aperture 20 on behalf of the transport of milk is provided. The line 4 serving to drain the milk to the milk meter 3 is connected to this buffer space 19. Furthermore, in this buffer space 19 there is provided a stationary member 21 which partially projects into the opening between inner space 22 and the buffer space 19 to ensure that the milk gradually flows into buffer space 19 and any separation of the milk is prevented. On the top side of this member 21 there is provided a temperature-sensitive sensor 23 to make temperature measurements. The milk temperature, as may thus be established already in the teat cup 2, is a good measure of the body temperature; especially the body temperatures of ill animals, such as those affected by mastitis, are beyond the normal value. A flow-sensitive sensor 24 to establish the starting and stopping of the milk flow is included in a falling portion of the milk line 4. The operation of this flow-sensitive sensor is based on that a flow of milk makes an electrical connection between two electrodes. The inclined position of the sensor prevents milk from being left in between the electrodes, or to put it differently, it prevents that a little pool of milk remains in between the electrodes; for this would result in that a flow of milk is indicated uninterruptedly. The milk line 4 also includes a vacuum-sensitive sensor 26 to establish whether a sufficient vacuum prevails in the milk line 4 and the teat cup 2. In milk meter 3 there is provided a sensor to determine the electrical conductivity 25, this is the mastitis sensor. This mastitis sensor comprises a reservoir provided with electrodes to measure the electrical conductivity of milk being in the reservoir. With each new flow of milk, the milk being in the reservoir is replaced. If the milk is affected, a higher electrical conductivity is established. As with every new flow of milk a slight increase in the electrical conductivity is observed in the beginning, it is posisble to establish when a flow of milk starts, too, by means of this mastitis sensor in the place of, or in addition to, the flow-sensitive sensor. The output signals S1, S2, S3 and S4 of the respective sensors 23, 24, 25 and 26 are applied to a computer 27, where the information from these sensors is further processed and made knowable on the display screen of a monitor 28. The discharge line 5 is further provided with a three-way valve 29 to be able to drain the flow of milk from a quarter of the animal's udder affected by mastitis off into a waste tank 30. When the farmer decides to send milk to the waste tank 30 on account of information made knowable by the computer and he issues an appropriate command to the computer to do so, the three-way valve 29 is changed over by means of a signal S5 produced by the computer.

## Claims

1. A method of automatically milking animals, such as cows, in an implement with a milking plant including a computer and a milking robot with teat cups which are automatically connectable to the teats of an animal to be milked, in which method by means of a flow-sensitive sensor signals are produced indicating the beginning and the end of the milk flow from at least one teat, characterized by determining in the computer the dead time between the instant when a vacuum-sensitive sensor has determined a sufficient vacuum in a teat cup applied to a relevant teat and the instant when the start of a flow of milk from this teat has been determined by the flow sensitive sensor, whereafter, when in the computer it is established that the dead time exceeds a predetermined period of time as well as upon the production of the signal indicating the end of the milk flow from said teat, the teat cup is automatically put out of operation.

2. A method as claimed in claim 1, characterized in that the dead time for the flow of milk from each of the teats is determined.

3. A method as claimed in claim 1 or 2, characterized in that the extent to which the dead time exceeds a predetermined value for a relevant animal is determined by means of the computer.

4. A method as claimed in claim 2, characterized in that the extent to which the dead time exceeds the predetermined value for each of the flows of milk from the respective teats is determined.

5. A method as claimed in any one of the preceding claims, characterized in that the animal is led away from the location where automatic milking is intended to take place, when, after the creation of a vacuum in a teat cup, a particular time in relation to the dead time previously determined for the relevant animal has elapsed without the flow of milk in this cup having started.

6. A method as claimed in any one of the preceding claims, characterized in that by means of the computer an indication of heat or illness of the animal is obtained from the dead time.

7. A method as claimed in claim 6, characterized in that an indication of heat or illness of an animal is obtained from the dead time in combination with the temperature of the flow of milk established by a temperature sensor.

8. A method as claimed in claim 6 or 7, characterized in that an indication of heat or illness of an animal is obtained from the dead time in combination with the electrical conductivity of the flow of milk established by a milk-conductivity sensor.

9. A method as claimed in any one of claims 6 to 8, characterized in that, at randomly selectable times, the monitor display of the computer and/or a printer is capable of indicating the animals of which the dead time and/or the electrical conductivity and/or the temperature of a flow of milk have/has exceeded the respective predetermined values.

10. A method as claimed in claim 9, characterized in that on the basis of the information on the electrical conductivity of a flow of milk given by the computer, it is decided on whether the milk produced by a relevant animal has to be drained off, e.g. into a waste tank, or not.

11. An implement for automatically milking animals, such as cows, with a milking plant (1) including a computer (27) and a milking robot with teat cups (2) which are automatically connectable to the teats of an animal to be milked, the implement further comprising a flow-sensitive sensor (24) for producing signals indicating the beginning and the end of the flow of milk from at least one teat, characterized in that, the implement is provided with a vacuum-sensitive sensor (26) and the computer (27) is arranged to determine in response to signals from the flow-sensitive sensor (24) and the vacuum-sensitive sensor (26) the dead time between the instant when the vacuum-sensitive sensor has determined the existence of a sufficient vacuum in a teat-cup connected to a teat and the instant when the flow of milk from this teat has started and to determine if said dead time exceeds a predetermined period of time, in which case, as well as upon the production of a signal indicating the end of the milk flow from that teat, the teat cup is put out of operation automatically by means of the computer (27).

12. An implement as claimed in claim 11, characterized in that by means of the computer (27) an indication of heat or illness of the animal is obtainable from the dead time.

13. An implement as claimed in claim 12, characterized in that there is provided a temperature-sensitive sensor (23) for establishing the temperature of the relevant flow of milk, whilst by means of the computer (27) an indication of heat or illness of an animal is obtainable from the dead time in combination with the information stemming from the temperature-sensitive sensor (23).

14. An implement as claimed in claim 12 or 13, characterized in that there is provided a sensor (25) for establishing the electrical conductivity of the milk, whilst by means of the computer (27) an indication of heat or illness of an animal is obtainable from the dead time in combination with the information stemming from the electrical-conductivity sensor (25).

## Patentansprüche

1. Verfahren zum automatischen Melken von Tieren, wie z. B. Kühen, in einer Vorrichtung mit einer Melkanlage, die einen Computer und einen Melkroboter mit Zitzenbechern aufweist, welche automatisch an die Zitzen eines zu melkenden Tieres anzuschließen sind, wobei von einem Strömungssensor Signale erzeugt werden, die den Beginn und das Ende des Milchflusses aus mindestens einer Zitze anzeigen,
dadurch gekennzeichnet, daß in dem Computer die Totzeit ermittelt wird, die zwischen dem Zeitpunkt, zu dem ein auf Vakuum ansprechender Sensor ein ausreichendes Vakuum in einem an eine zugehörige Zitze angeschlossenen Zitzenbecher festgestellt hat, und dem Zeitpunkt vergangen ist, zu dem von dem Strömungssensor das Einsetzen eines Milchflusses aus dieser Zitze festgestellt wird, wobei der Zitzenbecher automatisch außer Betrieb gesetzt wird, wenn in dem Computer festgestellt wird, daß die Totzeit über einen vorgegebenen Zeitraum hinausgeht, und wenn das Signal gegeben wird, das das Ende des Milchflusses aus dieser Zitze anzeigt.

2. Verfahren nach Anspruch 1,
dadurch gekennzeichnet, daß die Totzeit in bezug auf den Milchfluß aus jeder einzelnen Zitze ermittelt wird.

3. Verfahren nach Anspruch 1 oder 2,
dadurch gekennzeichnet, daß das Maß, um welches die Totzeit einen für ein bestimmtes Tier vorgegebenen Wert überschreitet, durch den Computer ermittelt wird.

4. Verfahren nach Anspruch 2,
dadurch gekennzeichnet, daß das Maß ermittelt wird, um welches die Totzeit den für den jeweiligen Milchfluß aus den zugehörigen Zitzen vorgegebenen Wert überschreitet.

5. Verfahren nach einem der vorhergehenden Ansprüche,
dadurch gekennzeichnet, daß das Tier von dem Ort weggeführt wird, an dem das automatische Melken stattfinden soll, wenn nach dem Erzeugen eines Vakuums in einem Zitzenbecher ein bestimmter Zeitraum im Verhältnis zu der für das betreffende Tier zuvor festgelegten Totzeit verstrichen ist, ohne daß der Milchfluß in diesem Becher eingesetzt hat.

6. Verfahren nach einem der vorhergehenden Ansprüche,
dadurch gekennzeichnet, daß anhand der Totzeit mittels des Computers eine Anzeige bezüglich Brunst oder Krankheit des Tieres erzielt wird.

7. Verfahren nach Anspruch 6,
dadurch gekennzeichnet, daß anhand der Totzeit in Kombination mit der durch einen Temperatursensor gemessenen Temperatur des Milchstromes eine Anzeige bezüglich Brunst oder Krankheit eines Tieres erzielt wird.

8. Verfahren nach Anspruch 6 oder 7,
dadurch gekennzeichnet, daß anhand der Totzeit in Kombination mit der durch einen Milchleitfähigkeitssensor gemessenen elektrischen Leitfähigkeit des Milchstromes eine Anzeige bezüglich Brunst oder Krankheit eines Tieres erzielt wird.

9. Verfahren nach einem der Ansprüche 6 bis 8,
dadurch gekennzeichnet, daß zu beliebig festzulegenden Zeitpunkten auf dem Bildschirm des Computers und/oder über einen Drucker eine Anzeige über die Tiere zu erzielen ist, bei denen die Totzeit und/oder die elektrische Leitfähigkeit und/oder die Temperatur eines Milchstromes die jeweils vorgegebenen Werte überschritten haben/hat.

10. Verfahren nach Anspruch 9,
dadurch gekennzeichnet, daß aufgrund der von dem Computer gelieferten Informationen über die elektrische Leitfähigkeit eines Milchstromes darüber entschieden wird, ob die von einem zugehörigen Tier abgegebene Milch beispielsweise in einen Ausschußbehälter abzuleiten ist oder nicht.

11. Vorrichtung zum automatischen Melken von Tieren, wie z. B. Kühen, mit einer Melkanlage (1), die einen Computer (27) und einen Melkroboter mit Zitzenbechern (2) aufweist, welche automatisch an die Zitzen eines zu melkenden Tieres anzuschließen sind, wobei die Vorrichtung ferner einen Strömungssensor (24) zum Erzeugen von Signalen aufweist, die den Beginn und das Ende des Milchflusses aus mindestens einer Zitze anzeigen,
dadurch gekennzeichnet, daß die Vorrichtung einen auf Vakuum ansprechenden Sensor (26) aufweist, und daß der Computer (27) als Reaktion auf von dem Strömungssensor (24) und dem auf Vakuum ansprechenden Sensor (26) gelieferte Signale die Totzeit zwischen dem Zeitpunkt, zu dem der auf Vakuum ansprechende Sensor das Vorhandensein eines ausreichenden Vakuums in einem an eine Zitze angeschlossenen Zitzenbecher festgestellt hat, und dem Zeitpunkt, zu dem der Milchfluß aus dieser Zitze eingesetzt hat, ermittelt und prüft, ob die Totzeit einen vorgegebenen Zeitraum überschreitet, wonach bei Auftreten eines Signals, das das Ende des Milchflusses aus dieser Zitze anzeigt, der Zitzenbecher von dem Computer (27) automatisch außer Betrieb gesetzt wird.

12. Vorrichtung nach Anspruch 11,
dadurch gekennzeichnet, daß anhand der Totzeit mittels des Computers (27) eine Anzeige bezüglich Brunst oder Krankheit des Tieres zu erzielen ist.

13. Vorrichtung nach Anspruch 12,
dadurch gekennzeichnet, daß ein Temperatursensor (23) vorgesehen ist, um die Temperatur des jeweiligen Milchstromes zu messen, und daß anhand der Totzeit in Kombination mit den von dem Temperatursensor (23) gelieferten Informationen mittels des Computers (27) eine Anzeige bezüglich Brunst oder Krankheit eines Tieres zu erzielen ist.

14. Vorrichtung nach Anspruch 12 oder 13,
dadurch gekennzeichnet, daß ein Sensor (25) zum Ermitteln der elektrischen Leitfähigkeit der Milch vorhanden ist, und daß anhand der Totzeit in Kombination mit den Informationen von dem auf elektrische Leitfähigkeit ansprechenden Sensor (25) mittels des Computers (27) eine Anzeige bezüglich Brunst oder Krankheit eines Tieres zu erzielen ist.

## Revendications

1. Procédé de traite automatique d'animaux, tels que des vaches, dans un dispositif avec une installation de traite comportant un ordinateur et un robot trayeur avec des godets de trayons pouvant être reliés automatiquement aux trayons d'un animal à traire, dans lequel procédé sont produits, au moyen d'un capteur sensible au débit, des signaux indiquant le commencement et la fin de l'écoulement de lait, venant d'au moins un trayon,
**caractérisé** par le fait de déterminer dans l'ordinateur le temps mort entre l'instant où un capteur sensible au vide a déterminé un vide suffisant dans un godet de trayon appliqué à un trayon correspondant et l'instant où le commencement d'un écoulement de lait de ce trayon a été déterminé par le capteur sensible au débit, après quoi, quand il est établi dans l'ordinateur que le temps mort dépasse une durée prédéterminée, ainsi que lors de la production du signal indiquant la fin de l'écoulement de lait venant dudit trayon, le godet de trayon est automatiquement mis hors service.

2. Procédé selon la revendication 1, caractérisé en ce que le temps mort pour l'écoulement de lait venant de chacun des trayons est déterminé.

3. Procédé selon la revendication 1 ou 2, caractérisé en ce que la mesure dans laquelle le temps mort dépasse la valeur prédéterminée pour un animal concerné est déterminée au moyen de l'ordinateur.

4. Procédé selon la revendication 2, caractérisé en ce que la mesure dans laquelle le temps mort dépasse la valeur prédéterminée pour chacun des écoulements de lait venant des trayons respectifs est déterminée.

5. Procédé selon l'une quelconque des revendications précédentes, caractérisé en ce que l'animal est éconduit de l'endroit où la traite automatique est censée avoir lieu, quand, après la création d'un vide dans un godet de trayon, il s'est écoulé un temps particulier en rapport avec le temps mort précédemment déterminé pour l'animal concerné, sans que l'écoulement de lait dans ce godet ait commencé.

6. Procédé selon l'une quelconque des revendications précédentes, caractérisé en ce qu'au moyen de l'ordinateur, une indication de chaleur ou de maladie de l'animal est obtenue d'après le temps mort.

7. Procédé selon la revendication 6, caractérisé en ce qu'une indication de chaleur ou de maladie d'un animal est obtenue d'après le temps mort en combinaison avec la température de l'écoulement de lait établie par un capteur de température.

8. Procédé selon la revendication 6 ou 7, caractérisé en ce qu'une indication de chaleur ou de maladie d'un animal est obtenue d'après le temps mort en combinaison avec la conductivité électrique de l'écoulement de lait, établie par un capteur de conductivité du lait.

9. Procédé selon l'une quelconque des revendications 6 à 8, caractérisé en ce que, à des moments pouvant être choisis au hasard, l'affichage du moniteur de l'ordinateur et/ou une imprimante est capable d'indiquer les animaux dont le temps mort et/ou la conductivité électrique et/ou la température d'un écoulement de lait a ou ont dépassé les valeurs prédéterminées respectives.

10. Procédé selon la revendication 9, caractérisé en ce que, d'après l'information sur la conductivité électrique d'un écoulement de lait donnée par l'ordinateur, il est décidé s'il y a lieu d'évacuer le lait produit par un animal concerné, par exemple dans un réservoir à déchets,ou non.

11. Dispositif de traite automatique d'animaux, tels que des vaches, avec une installation de traite (1) comportant un ordinateur (27) et un robot trayeur avec des godets de trayons pouvant être reliés automatiquement aux trayons d'un animal à traire, ce dispositif comprenant en outre un capteur (24) sensible au débit pour produire des signaux indiquant le commencement et la fin de l'écoulement de lait d'au moins un trayon,
**caractérisé** en ce que le dispositif est muni d'un capteur (26) sensible au vide et en ce que l'ordinateur (27) est agencé pour déterminer, en réponse à des signaux du capteur (24) sensible au débit et du capteur (26) sensible au vide, le temps mort entre l'instant où le capteur sensible au vide a déterminé l'existence d'un vide suffisant dans un godet de trayon relié à un trayon et l'instant où l'écoulement de lait de ce trayon a commencé, et pour déterminer si ce temps mort dépasse une durée prédéterminée, auquel cas, ainsi que lors de la production d'un signal indiquant la fin de l'écoulement de lait du trayon, le godet de trayon est automatiquement mis hors service au moyen de l'ordinateur (27).

12. Dispositif selon la revendication 11, caractérisé en ce qu'au moyen de l'ordinateur (27) une indication de chaleur ou de maladie peut être obtenue d'après le temps mort.

13. Dispositif selon la revendication 12, caractérisé en ce qu'il est prévu un capteur (23) sensible à la température pour établir la température de l'écoulement de lait concerné, tandis qu'au moyen de l'ordinateur (27) une indication de chaleur ou de maladie d'un animal peut être obtenue d'après le temps mort en combinaison avec l'information provenant du capteur (23) sensible à la température.

14. Dispositif selon la revendication 12 ou 13, caractérisé en ce qu'il est prévu un capteur (25) pour établir la conductivité électrique du lait, tandis qu'au moyen de l'ordinateur (27) une indication-de chaleur ou de maladie peut être obtenue d'après le temps mort en combinaison avec l'information provenant du capteur (25) de conductivité électrique.
